# FASCICULE DE BREVET EUROPEEN

(11) **EP 2 164 212 B1**
(45) Date de publication et mention de la délivrance du brevet: **23.08.2017**
(21) Numéro de dépôt: 09168677.4
(22) Date de dépôt: 26.08.2009
(51) Int. Cl.: H04L 12/58, G10L 15/26

(54) **Procédé et système de communication pour la détermination d'une séquence de services liés à une conversation**
Kommunikationsverfahren und -system zur Bestimmung einer Sequenz von Leistungen, die mit einer Unterhaltung verbunden sind
Communication method and system for determining a sequence of services associated with a conversation

(30) Priorité: 11.09.2008 FR 0856129
(43) Date de publication de la demande: 17.03.2010
(73) Titulaire: ALCATEL LUCENT, 92100 Boulogne-Billancourt (FR)
(72) Inventeur: Boussard, Mathieu, 91620, NOZAY (FR); Pastor, Alain, 91620, NOZAY (FR)
(74) Mandataire: Berthier, Karine

(56) Documents cités:
- WO-A-2004/029831
- WO-A-2006/102030
- US-A1- 2005 137 877

## Description

La présente invention se rapporte au domaine de la gestion d'informations échangées au cours d'une conversation, en particulier à un procédé et à un système de communication pour la détermination d'une séquence de services liés à une conversation à laquelle participe un utilisateur à partir d'un système de communication.

Au cours d'une conversation téléphonique ou d'une conversation effectuée via un logiciel de messagerie instantanée (aussi appelée « chat »), il n'est pas rare que les interlocuteurs s'assignent des tâches en relation avec les propos qu'ils sont en train d'échanger.

Par exemple, lorsque le sujet de la conversation entre deux interlocuteurs consiste en la préparation d'un évènement tel qu'une excursion sur un site touristique, les interlocuteurs peuvent, en cours de conversation, s'assigner des tâches relatives à l'organisation de l'excursion. Ainsi, l'un des interlocuteurs pourra être en charge, postérieurement à la conversation, de consulter les prévisions météorologiques sur le site, d'effectuer une recherche de l'itinéraire à emprunter pour se rendre sur le site, de procéder à une réservation à distance de places de train ou de joindre une tierce personne pour lui demander si elle est intéressée par une telle excursion.

Classiquement, pour consulter les informations ou réaliser les tâches qui leur ont été demandées, respectivement assignées, au cours de la conversation, les interlocuteurs activent des services par l'intermédiaire d'applications informatiques, telles que leur navigateur Web, installées sur leur système de communication.

Dans l'exemple précédemment évoqué, l'interlocuteur en charge de se renseigner sur la météorologie pourra ouvrir son navigateur Web installé sur son système de communication et saisir une URL (initiales anglo-saxonnes mises pour « Universal Ressource Locator») correspondant à un site Web de prévision météorologique. De plus, si cet interlocuteur doit également s'occuper de réserver des billets de transport, il pourra saisir une nouvelle URL dans son navigateur Web correspondant à une site Web de réservation de billet en ligne. De même, si l'interlocuteur s'est proposé ou si il lui a été demandé au cours de la conversation d'envoyer un mail à un ami pour lui proposer de se joindre à l'excursion, il pourra activer un service de messagerie électronique, disponibles depuis son système de communication afin de pouvoir envoyer un mail.

Cependant, l'interlocuteur ne doit pas avoir oublié les tâches qui lui ont été attribuées au cours de la conversation. D'autre part, l'interlocuteur ne connaît pas toujours ou ne pense pas toujours à exécuter des services disponibles depuis son système de communication, lui permettant de réaliser les tâches qui lui ont été attribuées au cours de la conversation.

De plus, dans le cas où l'interlocuteur a déterminer les services adaptés, il devra, pour les lancer, nécessairement ouvrir depuis son système de communication, une application particulière et saisir manuellement des informations qui auront pourtant déjà été énoncées au cours de la conversation. Cette manipulation est d'autant plus fastidieuse qu'elle doit être réalisée autant de fois qu'un interlocuteur a besoin d'un nouveau service pour la réalisation d'une tâche.

Le document WO2006/102030 décrit un procédé de gestion de données échangées au cours d'une conversation entre un utilisateur et un centre d'appel automatique dans lequel les données échangées au cours de la conversation sont récupérées pour stockage dans une base de données pour traitement ultérieur, notamment pour identifier chaque mot utilisé lors d'une conversation téléphonique.

Le document WO 2004/029831 concerne un procédé permettant à un auditeur (conférence, ou émission radio ou émission TV) de retrouver rapidement des compléments d'informations sur des sujets abordés dans un exposé oral qui l'intéresse plus particulièrement. Le procédé mis en oeuvre consiste à permettre à l'orateur de définir des termes ou expressions qu'il prononcera lors de son discours, et de leur associer des liens vers des compléments d'information. L'auditeur du discours peut demander lors du discours ou ultérieurement à accéder à ces informations complémentaires lorsqu'il entend un mot qui l'intéresse.

La présente invention vise à faciliter, pour un utilisateur, la réalisation des tâches qui lui ont été assignées au cours d'une conversation.

Dans ce but, un premier objet de l'invention concerne un procédé de gestion de données échangées au cours d'une conversation à laquelle participe un utilisateur depuis un système de communication selon la revendication 1.

Un second objet de l'invention concerne un système de communication comprenant des moyens pour permettre à un utilisateur d'effectuer une conversation, caractérisé en ce qu'il comprend de plus :
- un moyen de stockage pour stocker une liste de services susceptibles d'être lancés à partir au moins dudit système de communication ;
- un serveur d'analyse de langage naturel apte à :
   ∘ sélectionner une pluralité de services à partir de la liste de services stockée, en fonction d'au moins une analyse sémantique de l'ensemble des expressions énoncées au cours de la conversation ;
   déterminer une séquence des services sélectionnés en fonction d'une analyse contextuelle de l'ensemble des expressions énoncées au cours de la conversation ;
- des moyens d'affichage pour afficher la séquence des services sélectionnés.

D'autres caractéristiques et avantages de l'invention apparaîtront à la lecture de la description qui va suivre en référence aux dessins annexés dans lesquels :
- La figure 1 représente schématiquement une architecture préférée de différents éléments constitutifs d'un système de communication ainsi que leurs interactions en vue de la détermination d'une séquence de services selon l'invention,
- La figure 2 représente schématiquement différentes interactions entre un utilisateur, un client de messagerie et un serveur d'analyse de langage naturel d'un système de communication selon un mode préféré de l'invention.

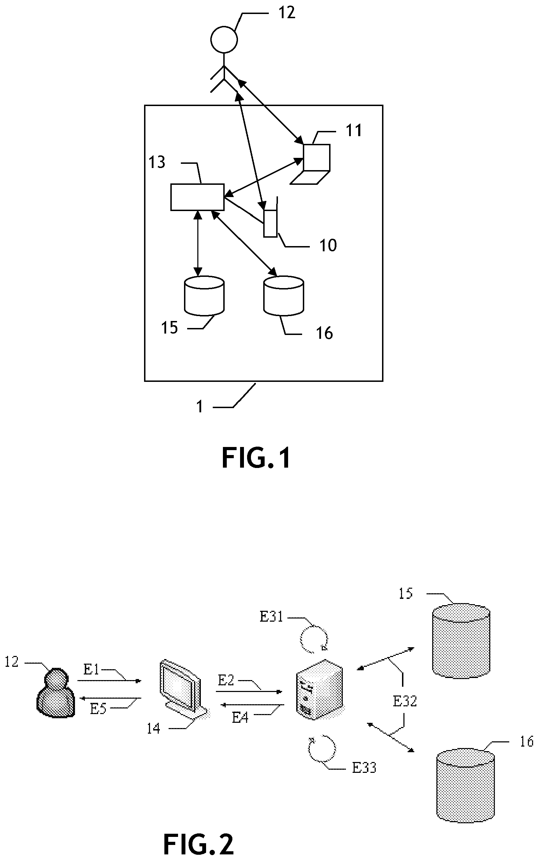

Le système de communication 1, tel que montré sur la figure 1, comporte classiquement un ensemble de terminaux 10, 11 tels qu'un téléphone 10 ou un ordinateur 11 reliés à un écran à partir desquels un utilisateur 12 peut effectuer une conversation téléphonique ou par l'intermédiaire d'un client de messagerie instantanée.

Un tel système de communication 1 peut également servir de point d'accès à des services. Ainsi, par exemple, lorsqu'un navigateur Web est installé sur l'ordinateur 11, un utilisateur 12 du système de communication 1 peut accéder à partir de cet ordinateur 11, entre autre, à des services de météorologie, de consultation de comptes bancaires ou de réservation de billets de transport, de tels services étant disponibles sur des sites Internet accédés à partir du navigateur Web.

De même, si un client de messagerie de type Outlook® est installé sur le système de communication 1, l'utilisateur 12 pourra accéder à un service de messagerie et donc recevoir ou envoyer des messages électroniques de la part ou à destination d'autres utilisateurs.

Il peut également être envisageable qu'un service de conférence téléphonique puisse être lancé puis exécuté depuis l'un des terminaux 10, 11 du système de communication 1.

Conformément au procédé de l'invention, lorsqu'un utilisateur 12 a réalisé une conversation, il est possible, à la fin de la conversation, de récupérer et de transmettre l'ensemble des expressions énoncées au cours de la conversation à un serveur 13 d'analyse de langage naturel. Cette étape de récupération peut être accomplie suite à une conversation vocale effectuée via un téléphone 10 ou bien suite à une conversation qualifiée d'écrite effectuée via un client 14 de messagerie instantanée installé, par exemple sur le terminal 11 du système de communication 1.

Le serveur 13 d'analyse de langage naturel réalise alors une analyse sémantique des expressions récupérées et sélectionne une pluralité de services parmi une liste de services préalablement enregistrés en fonction de l'analyse sémantique réalisée. Chaque service de la liste peut consister en l'un des services préalablement cités et susceptibles d'être lancés et/ou exécutés à partir du système de communication 1.

Une fois les services sélectionnés, le serveur 13 d'analyse de langage naturel réalise une analyse contextuelle des expressions énoncées au cours de la conversation. Nous entendrons par analyse contextuelle le fait d'analyser une expression en fonction des termes utilisés précédemment ou ultérieurement à ladite expression dans la conversation, à la différence de l'analyse sémantique où seule la signification de l'expression est analysée.

Suite à cette analyse contextuelle, une détermination d'une séquence des services sélectionnés est réalisée en fonction du résultat de l'analyse contextuelle. La séquence déterminée est alors affichées sur une interface du système de communication 1.

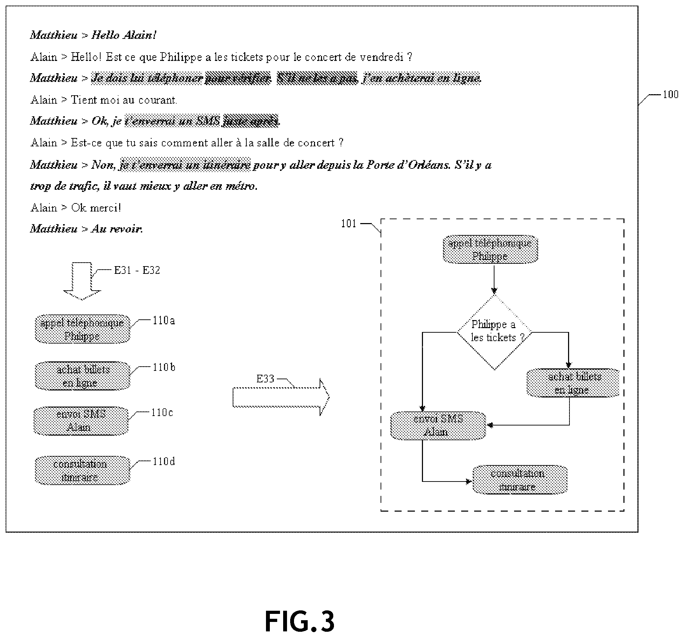

En référence aux figures 2 et 3, les différentes fonctionnalités du système de communication ainsi que les différentes étapes mises en oeuvre pour la détermination d'une séquence de services liés à une conversation ayant eu lieu vont être détaillées dans le cas où la conversation est une conversation effectuée à partir d'un logiciel de messagerie instantanée.

Comme représenté sur les figures 2 et 3, un utilisateur 12 est en conversation avec au moins un autre utilisateur par l'intermédiaire d'un logiciel de messagerie instantanée. Une telle conversation est initialisée par l'ouverture d'une session partagée à partir des clients de messageries instantanée respectivement installés sur les systèmes de communication des utilisateurs.

La conversation consiste alors pour un utilisateur, d'une part, à saisir et envoyer successivement des expressions à partir de l'interface de son client de messagerie instantanée et, d'autre part, à recevoir sur l'interface de son client les expressions saisies et envoyées par les autres participants à la conversation. Les expressions saisies et reçues sont classiquement des mots ou des phrases. Classiquement, une des zones d'affichage 100 constitutive de l'interface du client de messagerie instantanée, est destinée à afficher l'ensemble des expressions envoyées et reçues par l'utilisateur au cours de la conversation.

La figure 3 représente une partie de l'interface graphique d'un client de messagerie à partir duquel un utilisateur dénommé Matthieu a eu une conversation avec un second utilisateur dénommé Alain. L'ensemble des expressions échangées au cours de la conversation est affiché sur la zone d'affichage 100 de l'interface.

Conformément au procédé de l'invention, en fin de conversation Matthieu peut déclencher une fonctionnalité d'ordonnancement de tâches depuis son client de messagerie instantanée (Etape E1 sur figure 2). L'ensemble des expressions affichées dans la zone d'affichage 100 qui représente l'ensemble des expressions énoncées au cours de la conversation, est alors transmis à un serveur 13 d'analyse de langage naturel (Etape E2 sur figure 2).

Plus précisément, le serveur 13 effectue alors une analyse sémantique des expressions qui lui ont été transmises (Etape E31 sur figure 2), afin d'isoler dans un premier temps, des termes pertinents permettant, d'une part, de déterminer des tâches attribuées à l'utilisateur au cours de la conversation et, d'autre part, de déterminer des services à partir desquels l'utilisateur est susceptible de réaliser ces tâches.

Par exemple, si le serveur 13 reçoit l'ensemble des expressions de la conversation ayant eu lieu entre les utilisateurs Matthieu et Alain, l'analyse sémantique des expressions « je dois lui téléphoner », « j'en achèterai en ligne », « je t'enverrai un SMS » (initiales anglo-saxones mises pour « Short Message System ») et « je t'enverrai un itinéraire » par le serveur 13 permet de déterminer que Matthieu (utilisateur 12) doit réaliser quatre tâches après la conversation. Notamment, l'utilisateur doit:
- effectuer un appel téléphonique;
- effectuer un achat en ligne;
- envoyer un SMS ;
- envoyer un itinéraire;

L'analyse sémantique sert également à sélectionner des services à partir desquels l'utilisateur pourra réaliser les tâches qui lui ont été assignées. Pour ce faire, le serveur 13 d'analyse de langage naturel peut être relié avec une base de données 15 que nous appellerons référentiel sémantique de service. Ce référentiel 15 peut contenir une liste de services susceptibles d'êtres lancés et/ou exécutés à partir du système de communication 1 de l'utilisateur 12. A chaque service compris dans le référentiel peut être associé :
- une représentation arborescente dont chaque feuille correspond à un terme ;
- un item (bouton, hyperlien, onglet ou tout autre élément graphique pouvant être affiché sur l'interface du client de messagerie instantanée) destiné à être affiché sur l'interface du client de messagerie instantanée si le service auquel il est associé est sélectionné ;
- des méta-données comportant un ensemble de paramètres nécessaires au lancement du service depuis le système de communication 1.

Chaque feuille de la représentation arborescente peut correspondre à un terme sémantique auquel il peut être associé un score élémentaire. Ce score élémentaire représente le degré de pertinence du terme de l'arborescence vis-à-vis du service auquel est associée l'arborescence. Une telle représentation permet une analyse ontologique.

Une fois que les tâches que doit réaliser l'utilisateur ont été déterminées, le serveur 13 d'analyse de langage naturel est alors adapté à effectuer une comparaison entre les termes contenus dans les expressions dont l'analyse a servi à déterminer les tâches avec chacun des termes des structures arborescentes (Etape E32 sur figure 2).

Plus précisément, pour chaque expression ayant permis la détermination d'une tâche, la sélection d'un service est effectuée à partir d'une comparaison des termes utilisés dans l'expression et des termes des structures arborescentes. Au début de la comparaison, chaque service possède un score nul. Puis lorsqu'un terme d'une structure coïncide avec un terme de l'expression, le score du service dont la structure arborescente possède un terme coïncidant avec le terme isolé, est incrémenté du score élémentaire associé au terme de la structure.

Grâce à l'utilisation d'une ontologie permettant de faire le lien entre un terme isolé et au moins un des termes de la structure, il n'est pas nécessaire que le terme isolé et le terme de la structure soient totalement similaires pour qu'il y ait une correspondance. En effet, par exemple, le terme isolé "nouvelles" (forme canonique "nouvelle") pourra coïncider avec le terme "information" de la structure par l'utilisation avantageuse d'une ontologie décrivant leur relation.

De cette façon, pour chaque expression à partir de laquelle une tâche à réaliser a été déterminée, le serveur 13 sélectionne le service possédant le score global le plus élevé. Le service ainsi sélectionné est potentiellement le plus à même de permettre à l'utilisateur 12 de réaliser la tâche puisqu'il a été choisi en fonction d'une expression énoncée dans la conversation.

Dans notre exemple, quatre services ont été respectivement sélectionnées pour permettre à Matthieu de réaliser les tâches dont il a la charge. Comme le montre la figure 3, les différents services sont:
- « service de téléphonie » ;
- « service d'envoi de SMS » ;
- « service de réservation de billets en ligne »;
- « service de recherche d'itinéraire en ligne ».
Les services de téléphonie et d'envoi de SMS pourront être réalisés depuis des applications disponibles sur le système de communication 1. Les services de réservation de billets et de recherche d'itinéraire pourront s'effectuer depuis des sites Internet accessibles depuis le système de communication 1.

Une fois les tâches déterminées et les services associés sélectionnés, il est également intéressant de déterminer une séquence judicieuse dans laquelle l'utilisateur 12 doit réaliser les tâches et lancer les services sachant que le résultat associé à la réalisation de certains services peut conditionner l'exécution d'autres services.

Pour ce faire, le serveur 13 d'analyse de langage naturel est adapté à réaliser une analyse contextuelle des expressions énoncées au cours de la conversation (Etape E33 sur figure 2). Dans notre exemple, cette analyse détermine grâce aux expressions « pour vérifier » et « s'il ne les a pas » que le lancement du service d'achat de billets ligne ne doit être effectué que si Philippe ne possède pas les billets. De même, l'expression « juste après » indique qu'un SMS doit être envoyé à Alain une fois qu'il a été vérifié que Philippe avait les tickets ou une fois que Matthieu a acheté les tickets depuis un service d'achat en ligne.

Une fois la séquence des services déterminée, le serveur 13 transmet les items et les méta-données associées aux services sélectionnés au client 14 de messagerie instantanée de l'utilisateur 12 (Etape E4 sur figure 2). Les items sont alors affichés sur l'interface du client de messagerie en respectant la séquence déterminée (Etape E5 sur figure 2). L'affichage peut prendre la forme d'un diagramme d'état 101.

Avantageusement, l'utilisateur 12 peut, depuis son client 14 de messagerie instantanée modifier, la séquence de services qui lui est proposée ou remplacer certains services sélectionnés par d'autres services susceptibles d'êtres lancés et/ou exécutés depuis le système de communication 1.

De façon avantageuse, l'utilisateur 12 peut également déclencher le lancement et l'exécution des différents services. Ces derniers seront alors lancés et exécutés séquentiellement en respectant l'ordre établi dans la séquence en utilisant les méta-données qui auront été transmises.

Le résultat obtenu par la réalisation de chaque service pourra être réutilisé pour le lancement d'un service dont la réalisation est prévue ultérieurement dans la séquence.

Dans le mode décrit jusqu'ici, la sélection d'un service s'effectuait uniquement en fonction des expressions énoncées au cours de la conversation. Or, parmi la liste des services présents dans le référentiel 15, plusieurs services peuvent être réalisés par l'intermédiaire de sites Internet proches ou équivalents ou par différentes applications disponibles sur le système de communication 1 de l'utilisateur 12.

Par exemple, un service de réservation de billets de concert peut être exécuté à partir d'un site Internet d'une salle de spectacle, à partir du site d'un groupe de musique ou via le site d'une chaîne d'une enseigne musical. De même, joindre par téléphone un interlocuteur peut être effectué au moyen d'un service de téléphonie classique ou par l'intermédiaire d'un service de type voix sur IP.

Il peut donc être souhaitable d'affiner la sélection en fonction de préférences de l'utilisateur 12 préalablement enregistrées.

Pour ce faire, le serveur d'analyse 13 de langage naturel peut également être relié à une seconde base de données 16 contenant des profils utilisateur. Un profil utilisateur peut avantageusement comprendre :
- une liste de sites ou de pages Internet favoris à partir desquels l'utilisateur 12 désire préférentiellement consulter une information ou réaliser une action ;
- une liste de contact d'utilisateurs contenant, entre autre, pour chaque contact, le nom, le prénom et les différentes applications par lesquelles le contact peut être joint (messagerie électronique, messagerie instantanée, téléphonie classique, téléphonie sur IP, conférence téléphonique...) ainsi que les différentes informations nécessaires pour entrer en communication avec ces contacts par l'intermédiaire des applications précédemment citées ;

Dans l'exemple de conversation montrée à la figure 3, le premier service d'appel téléphonique sélectionné à partir de l'analyse sémantique des expressions énoncées au cours de la conversation peut également être sélectionné en fonction des préférences de l'utilisateur 12. Par exemple, si l'utilisateur a spécifié dans ces préférences qu'il désirait uniquement effectuer une conversation téléphonique en utilisant une application de voix sur IP, le serveur 13 d'analyse sélectionnera alors un service de téléphonie exécutable à partir d'une application de voix sur IP.

De plus, si les coordonnées téléphoniques de Philippe sont contenues dans les préférences de l'utilisateur, les méta-données associées au service de téléphonie sélectionné pourront alors avantageusement être complétées par ces coordonnées. De cette façon, l'utilisateur n'aura pas à saisir d'informations supplémentaires pour lancer le service de téléphonie depuis le client 14 de messagerie instantanée.

De même, le serveur d'analyse peut également consulter les préférences de l'utilisateur 12 préalablement stockées pour sélectionner un service de réservation de billets spécifiquement apprécié par l'utilisateur 12. Par exemple, le serveur 13 peut sélectionner l'URL d'un site d'une enseigne musical stockée dans les favoris de l'utilisateur 12.

L'utilisation d'une base de données 16 contenant des préférences de l'utilisateur permet donc une personnalisation des services proposés à l'utilisateur 12.

Bien que les différentes caractéristiques et avantages de l'invention aient été décrits en se référant à une conversation effectuée à partir de clients de messagerie instantanée, l'invention n'est pas limitée à un tel type de conversation. L'invention peut également être, entre autre, réalisée lorsque la conversation est une conversation téléphonique.

Lorsque la conversation est une conversation vocale effectuée à partir du terminal téléphonique 10, le système de communication 1 procède à un enregistrement de la conversation et transmet l'enregistrement au serveur 13 d'analyse de langage naturel à la fin de la conversation. Le serveur 13 d'analyse de langage naturel réalise alors les étapes d'analyse sémantique, de sélection de services, d'analyse contextuelle et de détermination de séquence de services telles que préalablement décrites.

De plus, l'établissement d'une conversation téléphonique peut déclencher une application d'affichage (non représentée) au niveau du système de communication 1. Le serveur 13 d'analyse est alors adapté à transmettre la séquence de services déterminée à l'application qui se charge d'afficher la séquence sur une interface graphique du système de communication 1. L'affichage s'effectue, par exemple, sur l'interface graphique de l'ordinateur 11 du système de communication 1.

## Revendications

1. Procédé de gestion d'informations échangées au cours d'une conversation à laquelle participe un utilisateur (12) depuis un système de communication (1), le procédé comprenant , une fois la conversation terminée, une étape de
récupération (E2) de l'ensemble des expressions énoncées au cours de la conversation ;
**caractérisé en ce qu'**il comporte en outre les étapes suivantes:
- analyse sémantique (E31) par un serveur (13) d'analyse de langage naturel des expressions récupérées ;
- sélection (E32) par ledit serveur (13) d'une pluralité de services à partir d'une liste de services préalablement enregistrés, en fonction d'au moins ladite analyse sémantique, chaque service de ladite liste étant susceptible d'être lancé à partir dudit système de communication (1);
- analyse contextuelle (E33) par ledit serveur (13) des expressions énoncées au cours de la conversation ;
- détermination par ledit serveur (13) d'une séquence desdits services sélectionnés en fonction de l'analyse contextuelle ;
- affichage (E4) sur ledit système de communication (1) de la séquence des services sélectionnés.

2. Procédé selon la revendication 1, **caractérisé en ce que** la sélection (E32) d'une pluralité de services est également fonction d'au moins une préférence dudit utilisateur (12) préalablement enregistrée,

3. Procédé selon l'une quelconque des revendications précédentes, **caractérisé en ce qu'**il comprend, en outre, une étape d'exécution séquentielle desdits services sélectionnés en fonction de la séquence déterminée.

4. Procédé selon l'une quelconque des revendications précédentes, **caractérisé en ce que**, la conversation étant une conversation téléphonique et les expressions étant énoncées localement, l'étape de récupération (E2) de l'expression comprend :
- la récupération d'un enregistrement vocal de la conversation ;
- la transmission de l'enregistrement vocal à un serveur 13 d'analyse de langage naturel.

5. Procédé selon l'une quelconque des revendications 1 à 3, **caractérisé en ce que** la conversation étant une conversation réalisée à partir d'au moins un client 14 de messagerie instantanée intégré dans ledit système de communication et la conversation étant constituée d'expressions saisies et envoyées a partir du, respectivement reçues par, ledit client 14 de messagerie l'étape de récupération comprend la transmission, par ledit client 14 de messagerie instantanée, de l'ensemble des expressions saisies ou reçues constituant la conversation à un serveur 13 d'analysé de langage naturel.

6. Procédé selon la revendication 5, **caractérisé en ce que** l'affichage de la séquence des services sélectionnés a lieu sur l'interface 100 dudit client 14 de messagerie instantanée.

7. Système de communication comprenant des moyens pour permettre à un utilisateur d'effectuer une conversation, **caractérisé en ce qu'**il comprend de plus:
- un moyen de stockage pour stocker une liste de services susceptibles d'être lancés à partir au moins dudit système de communication ;
- un serveur d'analyse de langage naturel apte à :
∘ sélectionneur une pluralité de services à partir de la liste de services stockée, en fonction d'au moins une analyse sémantique de l'ensemble des expressions énoncées au cours de la conversation ;
∘ déterminer une séquence des services sélectionnés en fonction d'une analyse contextuelle de l'ensemble des expressions énoncées au cours de la conversation ;
- des moyens d'affichage pour afficher la séquence des services sélectionnées.

8. Système de communication selon la revendication 7, **caractérisé en ce qu'**il comprend un second moyen de stockage (16) pour stocker des préférences dudit utilisateur (12), et **en ce que** ledit serveur (13) d'analyse de langage naturel est également apte à sélectionner ladite plurality de services en fonction des préférences stockées dans le second moyen de stockage (16).

## Patentansprüche

1. Verfahren zum Verwalten von Information, die während einer Konversation ausgetauscht wird, an der ein Benutzer (12) von einem Kommunikationssystem (1) aus teilnimmt, wobei das Verfahren umfasst, sobald die Konversation beendet ist, einen Schritt der Wiederherstellung (E2) aller Ausdrücke, die während der Konversation geäußert worden sind;
**dadurch gekennzeichnet, dass** es weiterhin die folgenden Schritte umfasst:
- semantische Analyse (E31) der wiederhergestellten Ausdrücke mittels eines natürlichen Sprachanalyseservers (13);
- Auswahl (E32) durch besagten Server (13) einer Vielzahl von Diensten aus einer Liste vorher gespeicherter Dienste auf Grundlage besagter semantischen Analyse, wobei jeder Dienst von besagter Liste von besagtem Kommunikationssystem (1) aus gestartet werden kann;
- Kontextanalyse (E33) durch besagten Server (13) der Ausdrücke, die während der Konversation geäußert worden sind;
- Bestimmen durch besagten Server (13) einer Sequenz von besagten Diensten, die ausgewählt worden sind auf Grundlage der Kontextanalyse;
- Anzeigen (E4) auf besagtem Kommunikationssystem (1) der Sequenz der ausgewählten Dienste.

2. Verfahren nach Anspruch 1, **dadurch gekennzeichnet, dass** die Auswahl (E32) einer Vielzahl von Diensten auch basiert auf mindestens einer vorher gespeicherten Präferenz (12) von besagtem Benutzer.

3. Verfahren nach einem beliebigen der vorhergehenden Ansprüche, **dadurch gekennzeichnet, dass** es weiterhin einen Schritt der sequentiellen Ausführung von besagten Diensten umfasst, die auf Grundlage der bestimmten Sequenz ausgewählt worden sind.

4. Verfahren nach einem beliebigen der vorhergehenden Ansprüche, **dadurch gekennzeichnet, dass** die Konversation eine Telefonkonversation ist und die Ausdrücke mündlich geäußert werden, wobei der Schritt der Wiederherstellung (E2) der Ausdrücke umfasst:
- die Wiederherstellung einer Sprachaufzeichnung der Konversation;
- die Übertragung der Sprachaufzeichnung auf einen natürlichen Sprachanalyseserver (13).

5. Verfahren nach einem beliebigen der Ansprüche 1 bis 3, **dadurch gekennzeichnet, dass** die Konversation eine Konversation ist, die von mindestens einem Instant Messaging Client (14) durchgeführt wird, der in besagtem Kommunikationssystem integriert ist, und die Konversation aus Ausdrücken gebildet wird, die eingegeben und gesendet werden oder entsprechend empfangen werden von besagtem Messaging Client (14), wobei der Wiederherstellungsschritt einschließt die Übertragung von besagtem Instant Messaging Client (14) aller Ausdrücke, die eingegeben oder empfangen wurden und die die Konversation darstellen, auf einen natürlichen Sprachanalyseserver (13).

6. Verfahren nach Anspruch 5, **dadurch gekennzeichnet, dass** das Anzeigen der Sequenz der ausgewählten Dienste auf der Schnittstelle (100) von besagtem Instant Messaging Client (14) stattfindet.

7. Kommunikationssystem, umfassend ein Mittel zum Ermöglichen eines Benutzers, eine Konversation durchzuführen, **dadurch gekennzeichnet, dass** es weiterhin umfasst:
- ein Mittel zum Speichern einer Liste von Diensten, die von mindestens besagtem Kommunikationssystem aus gestartet werden können;
- einen natürlichen Sprachanalyseserver, der fähig ist zum:
∘ Auswählen einer Vielzahl von Diensten aus der Liste der gespeicherten Dienste auf Grundlage mindestens einer semantischen Analyse aller Ausdrücke, die während der Konversation geäußert worden sind;
∘ Bestimmen einer Sequenz von Diensten, die auf Grundlage einer Kontextanalyse aller Ausdrücke ausgewählt worden sind, die während der Konversation geäußert worden sind;
- ein Anzeigemittel zum Anzeigen der Sequenz der ausgewählten Dienste.

8. Kommunikationssystem nach Anspruch 7, **dadurch gekennzeichnet, dass** es ein zweites Speichermittel (16) umfasst zum Speichern der Präferenzen von besagtem Benutzer (12), und dadurch, dass besagter natürlicher Sprachanalyseserver (13) ebenfalls in der Lage ist, besagte Vielzahl von Diensten auszuwählen auf Grundlage der Präferenzen, die in dem zweiten Speichermittel (16) gespeichert worden sind.

## Claims

1. A method for managing information exchanged during a conversation in which a user (12) is participating from a communication system (1), the method comprising, once the conversation is completed, a step of retrieving (E2) all of the expressions stated during the conversation;
**characterized in that** it further comprises the following steps:
- semantic analysis (E31) of the retrieved expressions by a natural language analysis server (13);
- selection (E32) by said server (13) of a plurality of services from a list of services previously saved, based on at least said semantic analysis, each service of said list being launchable from said communication system (1);
- contextual analysis (E33) by said server (13) of the expressions stated during the conversation;
- determination by said server (13) of a sequence of said services selected based on the contextual analysis;
- displaying (E4) on said communication system (1) the sequence of services selected.

2. A method according to claim 1, **characterized in that** the selection (E32) of a plurality of services is also based on at least one previously saved preference (12) of said user.

3. A method according to any one of the preceding claims, **characterized in that** it further comprises a step of sequential execution of said services selected based on the determined sequence.

4. A method according to any one of the preceding claims, **characterized in that**, the conversation being a telephone conversation and the expressions being stated vocally, the step of retrieving (E2) the expression comprises:
- the retrieval of a voice recording of the conversation;
- the transmission of the voice recording to a natural language analysis server (13).

5. A method according to any one of the claims 1 to 3, **characterized in that** the conversation being a conversation carried out from at least one instant messaging client (14) integrated into said communication system, and the conversation being formed of expressions entered and sent from, or respectively received by, said messaging client (14), the retrieval step comprises the transmission, by said instant messaging client (14), of all of the expressions entered or received that constitute the conversation to a natural language analysis server (13).

6. A method according to claim 5, **characterized in that** the displaying of the sequence of services selected takes place on the interface (100) of said instant messaging client (14).

7. A communication system comprising means for enabling a user to conduct a conversation, **characterized in that** it further comprises:
- a means of storage for storing a list of services launchable from at least said communication system;
- a natural language analysis server capable of:
∘ selecting a plurality of services from the list of stored services, based on at least one semantic analysis of all of the expressions stated during the conversation;
∘ determining a sequence of services selected based on a contextual analysis of all of the expressions stated during the conversation;
- display means for displaying the sequence of services selected.

8. A communication system according to claim 7, **characterized in that** it comprises a second storage means (16) for storing the preferences of said user (12), and **in that** said natural language analysis server (13) is also able to select said plurality of services based on the preferences stored in the second storage means (16).
